# EUROPÄISCHE PATENTSCHRIFT

(11) **EP 3 798 443 B1**
(45) Veröffentlichungstag und Bekanntmachung des Hinweises auf die Patenterteilung: **22.01.2025**
(21) Anmeldenummer: 20188564.7
(22) Anmeldetag: 30.07.2020
(51) Int. Cl.: F03D 1/06

(54) **WINDENERGIEANLAGE**
WIND ENERGY SYSTEM
ÉOLIENNE

(30) Priorität: 24.09.2019 DE 102019125642
(43) Veröffentlichungstag der Anmeldung: 31.03.2021
(73) Patentinhaber: Wobben Properties GmbH, 26607 Aurich (DE)
(72) Erfinder: Messing, Ralf, 26605 Aurich (DE); Mahmoud, Muhanad, 26607 Aurich (DE)
(74) Vertreter: Eisenführ Speiser

(56) Entgegenhaltungen:
- EP-A1- 3 115 598
- WO-A1-2009/025549
- DE-A1- 102010 032 676
- DE-A1- 102013 104 695
- DE-B4- 102013 104 695
- JP-A- 2003 254 226
- US-A1- 2010 076 614
- US-A1- 2011 103 950
- US-A1- 2011 110 777
- US-B2- 9 279 412

## Beschreibung

Die vorliegende Erfindung betrifft eine Windenergieanlage mit einem aerodynamischen Rotor mit wenigstens einem Rotorblatt, wobei das Rotorblatt eine aktive Strömungskontrolleinrichtung aufweist, die dazu ausgebildet ist, eine Strömung über das Rotorblatt aktiv zu beeinflussen.

Wirbelgeneratoren, die als passive Strömungskontrollmaßnahme für Rotorblätter von Windenergieanlagen eingesetzt werden, sind bekannt. Sie dienen grundsätzlich dazu, eine Ablösung der Strömung über das Profil des Rotorblattes zu verzögern oder genauer gesagt zu größeren Anstellwinkeln zu verschieben. Das Rotorblatt kann demnach durch den Einsatz von Wirbelgeneratoren über einen größeren Anstellwinkelbereich betrieben werden, ohne dass es zu einem Strömungsabriss kommt. Der große Anstellwinkelbereich ist deshalb vorteilhaft, weil eine Windenergieanlage unterschiedlichsten Betriebsbedingungen ausgesetzt ist, die vom Auslegungspunkt unter Umständen sogar stark abweichen.

Um einen möglichst wenig schwankenden, gleichzeitig optimierten Anlagenertrag sicherzustellen, ist daher zu gewährleisten, dass auf dem Rotorblatt nach Möglichkeit zu allen Betriebspunkten keine Strömungsablösung auftritt, die sonst zu erheblichen Leistungseinbußen der Windenergieanlage führen kann.

Bekannte Betriebsbedingungen, die zu einem kritischen Anstellwinkelanstieg führen können, sind zum Beispiel durch Regen benetzte oder anderweitig verschmutzte Rotorblätter, hohe Turbulenzintensität in der Anströmung, hohe vertikale Scherung der Bodengrenzschicht in der Anströmung, hohe horizontale Scherung in der Anströmung, wenn die Anlage teilweise im Nachlauf eines Hindernisses steht oder gegenüber der Auslegungsluftdichte erniedrigte Luftdichten. Um alle diese Einflussfaktoren abfangen zu können, haben sich Wirbelgeneratoren als kostengünstige und wirksame passive Strömungskontrolleinrichtung etabliert. Üblicherweise werden Wirbelgeneratoren auf der Saugseite des Rotorblattes bis in Bereiche bis zu einem relativen Rotorradius r/R=0,2-0,7 angebracht, in Einzelfällen findet auch eine Anbringung auf der Druckseite statt und zunehmend auch in Bereiche auf der Saugseite bis zur Blattspitze bei r/R=0,95-1.

Die Anbringung der Wirbelgeneratoren ist jedoch nicht unkritisch hinsichtlich Ertrag und Lärm. Wirbelgeneratoren generieren Längswirbel in der Grenzschichtströmung am Rotorblatt, die zu einer Erhöhung der wandnahen Strömungsgeschwindigkeiten in der Blattgrenzschicht führen, wodurch ja gerade die Gefahr, dass die Grenzschicht ablöst, reduziert wird, gleichzeitig erhöht sich dabei natürlich der Reibungswiderstand, was zu einem durchaus beträchtlichen Absinken der Gleitzahl führen kann. Es ist bekannt, dass der Einfluss der Gleitzahl auf die Anlagenleistung mit zunehmender Annäherung an die Blattspitze signifikant zunimmt.

Nachteilig an bekannten Wirbelgeneratoren ist, dass diese auch in Betriebsbereichen bzw. Betriebspunkten, in denen deren stabilisierende Wirkung nicht benötigt wird, da es beispielsweise nicht regnet, einen leistungsreduzierenden Einfluss entfalten. Durch die Existenz der stationären, also dauerhaft angebrachten, Wirbelgeneratoren ist demnach der Ertrag geringer als er sein könnte, wenn Betriebspunkte vorliegen, bei denen die am Rotorblatt anliegenden Anstellwinkel hinreichend klein sind und mit keiner Strömungsablösung zu rechnen ist.

Das Deutsche Patent- und Markenamt hat in der Prioritätsanmeldung zu vorliegender Anmeldung folgenden Stand der Technik recherchiert: DE 10 2010 032 676 A1, US 2010/0143123 A1, US 2011/0110777 A1, US 2015/0132130 A1, WO 2010/133594 A1.

US 2010/0076614 A1 betrifft ein Verfahren zum Betreiben einer Windenergieanlage, das ein Strömungssteuerungssystem umfasst. Das Verfahren umfasst das Betreiben der Windenergieanlage in einem ersten Modus, das Betreiben der Windenergieanlage in einem zweiten Modus, der sich von dem ersten Modus unterscheidet, das Erfassen von Betriebsdaten der Windenergieanlage während mindestens dem zweiten Modus, Bestimmen einer Wirksamkeit des Strömungssteuerungssystems unter Verwendung der erfassten Betriebsdaten und Durchführen einer Aktion basierend auf der Wirksamkeit des Strömungssteuerungssystems.

WO 2009/025549 A1 offenbart eine Windkraftanlage mit einem Rotor mit einer Anzahl von Rotorblättern, die jeweils eine Vorderkante und eine Hinterkante aufweisen. Mindestens ein Rotorblatt ist mit einer Reihe von Öffnungen versehen, die sich nahe der Hinterkante befinden. Das Rotorblatt weist Fluidverdrängungsmittel auf, die im Gebrauch abwechselnd Fluid aus den und in die Öffnungen drücken. Dies führt zu Wirbeln an der Hinterkante, die das erzeugte Geräusch reduzieren.

US 2011/0103950 A1 offenbart ein Rotorblattsystem einer Windkraftanlage mit einem drehbar an einem Rotor einer Windkraftanlage befestigten Blatt. Das System umfasst ferner eine Steuerung und eine oder mehrere Öffnungen, die entlang mindestens einer Oberfläche der Schaufel angeordnet sind, und eine Fluidbewegungsvorrichtung, die angeordnet ist, um ein Fluid zu oder von der einen oder den mehreren Öffnungen bereitzustellen. Eine kontrollierte Menge des Fluids wird der einen oder den mehreren Öffnungen zugeführt. Die Fluidmenge wird von der Steuerung bestimmt. Eine Windkraftanlage und ein Verfahren zum Betreiben einer Windkraftanlage werden ebenfalls offenbart. Eine Lösung nach dem Stand der Technik ist auch in US 9 279 412 B2 offenbart.

Vor diesem Hintergrund war es eine Aufgabe der vorliegenden Erfindung, eine Windenergieanlage mit verbessertem Ertrag bereitzustellen. Insbesondere war es dafür eine Aufgabe der vorliegenden Erfindung, eine Windenergieanlage bereitzustellen, die eine stabilisierende Wirkung von Wirbelgeneratoren nur dann abruft, wenn die Gefahr einer Strömungsablösung besteht, wobei in allen anderen Fällen auf die störenden Eingriffe in die Grenzschichtströmung verzichtet wird.

Erfindungsgemäß wird die Aufgabe durch eine Windenergieanlage mit einem aerodynamischen Rotor mit wenigstens einem Rotorblatt gemäß Anspruch 1 gelöst. Das Rotorblatt weist eine aktive Strömungskontrolleinrichtung auf, die dazu ausgebildet ist, eine Strömung über das Rotorblatt aktiv zu beeinflussen. Die Strömungskontrolleinrichtung umfasst eine Öffnung an einer Rotorblattoberfläche, genannt Rotorblattoberflächenöffnung, wobei die Strömungskontrolleinrichtung dazu eingerichtet ist, durch die Rotorblattoberflächenöffnung Luft mit einer steuerbaren Luftströmung abzusaugen und/oder auszublasen. Die Windenergieanlage weist eine Steuerung auf, die dazu eingerichtet ist, einen Betrag der steuerbaren Luftströmung durch die Rotorblattoberflächenöffnung hindurch nach wenigstens einer der nachfolgenden Regeln zu steuern: a) bei Überschreiten eines Drehzahlschwellwertes einer Drehzahl des Rotors, sukzessives Anheben der maximalen steuerbaren Luftströmung mit steigender Drehzahl, und/oder b) bei Überschreiten eines Drehmomentschwellwertes eines Drehmomentes des Rotors, sukzessives Anheben der maximalen steuerbaren Luftströmung mit steigendem Drehmoment.

Erfindungsgemäß wird der Ertrag von Rotorblättern weiter erhöht. Grundsätzlich wird die die Grenzschichtströmung stabilisierende Wirkung der Wirbelgeneratoren nur dann zum Einsatz kommen, wenn die Gefahr einer Strömungsablösung besteht, wofür die aktive Strömungskontrolleinrichtung vorgesehen ist. Falls diese Gefahr nicht besteht, sollte idealerweise auf sämtliche die Grenzschichtströmung störenden Eingriffe verzichtet werden.

Die aktive Strömungskontrolleinrichtung hat durch den Eintrag von Impuls und/oder Energie eine ähnliche stabilisierende Wirkung auf die Grenzschichtströmung wie stationäre Wirbelgeneratoren. Die aktive Strömungskontrolleinrichtung arbeiten vorzugsweise dergestalt, dass über Öffnungen auf der Rotorblattoberfläche Luft stationär oder instationär eingeblasen oder abgesaugt wird. Durch das Einblasen oder Absaugen werden an den Öffnungen Längswirbel erzeugt, die zu einer Erhöhung der wandnahen Strömungsgeschwindigkeiten führen und damit zu einer Stabilisierung der Grenzschichtströmung gegen Strömungsablösung.

Der Vorteil dieser aktiven Strömungskontrolleinrichtung ist, dass die Ausblasung oder das Absaugen der Luft zu- oder abgeschaltet werden kann, also je nach Bedarf. Damit kann ein wesentlicher Nachteil der passiven Wirbelgeneratoren des Standes der Technik behoben werden, nämlich die Stabilisierung der Strömung gegen Ablösung nur dann durchzuführen, wenn es aufgrund der vorliegenden Randbedingungen notwendig ist und ansonsten zu unterlassen, um dann auch keine leistungsreduzierenden Auswirkungen der Kontrollmaßnahme in Kauf nehmen zu müssen.

Durch die erfindungsgemäße Ansteuerung der aktiven Strömungskontrolleinrichtung, nämlich bei Überschreiten eines Drehzahlschwellwertes einer Drehzahl des Rotors, sukzessives Anheben der maximalen steuerbaren Luftströmung mit steigender Drehzahl, und/oder bei Überschreiten eines Drehmomentschwellwertes eines Drehmomentes des Rotors, sukzessives Anheben der maximalen steuerbaren Luftströmung mit steigendem Drehmoment, wird nun gewährleistet, dass tatsächlich die Stabilisierung der Strömung gegen Ablösung gerade dann und nur dann erfolgt, wenn die Gefahr der Ablösung besteht. Mit diesem Vorgehen kann damit insgesamt der Anlagenertrag weiter erhöht werden.

Die maximale steuerbare Luftströmung kann in einer Ausführung über den Betrag einer maximalen wandnormalen Geschwindigkeit über der Öffnung bzw. den Öffnungen der Rotorblattoberfläche bestimmt oder ausgedrückt werden. Dies ist besonders bei Öffnungen, die normal zu der Oberfläche des Rotorblattes geöffnet sind, vorteilhaft. In anderen Fällen, beispielsweise wenn die Luftströmung unter einem Winkel zu der Normalen der Rotorblattoberfläche ausgeblasen oder abgesaugt wird, ist es besonders vorteilhaft, den Betrag der Luftströmung als Volumenstrom zu bestimmen bzw. zu steuern.

Hierbei ist in gewissen Grenzen üblicherweise davon auszugehen, dass die zunehmende stabilisierende Wirkung, also eine Verhinderung der Strömungsablösung auf dem Rotorblatt, mit steigendem Betrag der steuerbaren Luftströmung zunimmt.

Ein Aspekt der vorliegenden Erfindung basiert also darauf, dass die maximale Luftströmung begrenzt ist. Diese maximale Luftströmung muss nicht notwendigerweise über die gesamte Öffnung bzw. das gesamte Rotorblatt konstant sein und zur Steuerung verwendet sein, vielmehr bietet die erfindungsgemäße Regelung eine Möglichkeit, unterschiedliche Ausströmungen in Längsrichtung des Rotorblattes vorzusehen, wobei die maximale Luftströmung über das gesamte Rotorblatt begrenzt ist.

Erfindungsgemäß wird demnach bei Überschreiten des Drehzahlschwellwertes bzw. des Drehmomentschwellwertes die maximal steuerbare Luftströmung mit steigender Drehzahl bzw. steigendem Drehmoment sukzessive angehoben. Besonders bevorzugt wird die maximale steuerbare Luftströmung bis zu einem zweiten Drehzahlschwellwert bzw. einem zweiten Drehmomentschwellwert, die größer als der Drehzahl- bzw. der Drehmomentschwellwert sind, sukzessive angehoben und bei Überschreiten des zweiten Drehzahlschwellwertes bzw. des zweiten Drehmomentschwellwertes nicht mehr weiter angehoben, obwohl die Drehzahl bzw. das Drehmoment weiter ansteigt.

Vorzugsweise wird ein positiver Wert einer Ausblasung, das heißt eine Luftströmung durch die Öffnung nach außen, und ein negativer Wert einer Absaugung entsprechen. Es ist besonders bevorzugt möglich, dass in unterschiedlichen Betriebsbereichen und/oder an unterschiedlichen Positionen des Rotorblattes sowohl Ausblasung als auch Absaugung auftreten.

Vorzugsweise ist die Strömungskontrolleinrichtung dazu eingerichtet, den Betrag der Luftströmung durch die Rotorblattoberflächenöffnung hindurch entlang einer Rotorblattlänge des Rotorblattes zu variieren.

Besonders vorteilhaft ist dies bei konstanter Anlagendrehzahl implementiert.

Die Öffnung kann hierbei eine einzige langgezogene Öffnung, die im Wesentlichen in Rotorblattlängsrichtung verläuft, oder mehrere Teilöffnungen, beispielsweise Schlitze oder Löcher, umfassen, die an unterschiedlichen Positionen in Rotorblattlängsrichtung angeordnet sind. Die mehreren Teilöffnungen können an gleicher Position in Profiltiefenrichtung oder an unterschiedlichen Positionen in Profiltiefenrichtung ausgebildet sein. Beispielsweise können auch mehrere Reihen von Teilöffnungen an unterschiedlichen Positionen in Profiltiefenrichtung ausgebildet sein und sich jeweils im Wesentlichen in Rotorblattlängsrichtung erstrecken.

Besonders bevorzugt wird eine Öffnung in einem Bereich in Umgebung der Vorderkante des Rotorblattes, beispielsweise im Bereich von 5% bis 35% der lokalen Profiltiefe, vorzugsweise in einem Bereich von 15% bis 35% und besonders bevorzugt in einem Bereich von 20% bis 35% der lokalen Profiltiefe vorgesehen. Alternativ oder zusätzlich kann eine weitere Öffnung im Bereich der Rotorblatthinterkante, beispielsweise in einem Bereich von 30% bis 100% der lokalen Profiltiefe, besonders bevorzugt von 80% bis 100%, vorgesehen sein. In beiden Fällen kann die Öffnung sowohl als eine einzige langgezogene Öffnung oder als mehrere Teilöffnungen ausgestaltet sein.

Vorzugsweise ist die Steuerung dazu eingerichtet, den Betrag der steuerbaren Luftströmung durch die Rotorblattoberflächenöffnung hindurch derart zu steuern, dass der Betrag der Luftströmung über die Rotorblattlänge abnimmt.

Vorzugsweise ist die Steuerung dazu eingerichtet, den Betrag der steuerbaren Luftströmung durch die Rotorblattoberflächenöffnung hindurch in Abhängigkeit einer Luftdichte zu steuern, insbesondere derart, dass die Abnahme des Betrages über die Rotorblattlänge mit geringerer Luftdichte abnimmt.

Vorzugsweise ist die Steuerung dazu eingerichtet, den Betrag der steuerbaren Luftströmung durch die Rotorblattoberflächenöffnung hindurch in Abhängigkeit einer Turbulenzintensität zu steuern, derart, dass die Abnahme des Betrages über die Rotorblattlänge mit geringerer Turbulenzintensität zunimmt.

Dieser Ausführung liegt die Erkenntnis zugrunde, dass eine niedrigere Turbulenzintensität ein Ausblasen bzw. Absaugen nur in einem Bereich erfordert, der näher an der Rotorblattwurzel liegt. Besonders vorteilhaft ist die Kombination dieser Ausführung mit der Steuerung in Abhängigkeit der Luftdichte, beispielsweise im Winter.

Vorzugsweise ist die Steuerung dazu eingerichtet, den Betrag der Luftströmung durch die Rotorblattoberflächenöffnung hindurch in Abhängigkeit eines Azimuthwinkels des Rotors zu variieren.

Hierbei können insbesondere bei konstanter Anlagendrehzahl Effekte vertikaler und/oder horizontaler Scherung berücksichtigt werden.

Vorzugsweise ist die Steuerung dazu eingerichtet, den Betrag der Luftströmung durch die Rotorblattoberflächenöffnung hindurch zyklisch über den Azimuthwinkel derart zu steuern, dass an einer Azimuthposition des Rotorblattes mit maximalem Bodenabstand, genannt 12 Uhr Position, ein größerer Betrag der Luftströmung durch die Rotorblattoberflächenöffnung austritt als in der Azimuthposition mit geringstem Bodenabstand, genannt 6 Uhr Position.

Diese Steuerung ist besonders vorteilhaft bei vertikaler Scherung mit positiven Scherkoeffizienten, d.h. wenn also die Windgeschwindigkeiten mit der Höhe zunehmen, was üblicherweise der Fall ist.

Für Situationen, in denen die Windgeschwindigkeit mit zunehmender Höhe über dem Boden abnimmt, das heißt, dass die Windgeschwindigkeit in der 12 Uhr Position kleiner ist als in der 6 Uhr Position, weist die vertikale Scherung einen negativen Scherungskoeffizienten auf. In diesem Fall ist die Steuerung besonders bevorzugt dazu eingerichtet, den Betrag der Luftströmung durch die Rotorblattoberflächenöffnung hindurch zyklisch über den Azimuthwinkel derart zu steuern, dass an der 12 Uhr Position ein kleinerer Betrag der Luftströmung durch die Rotorblattoberflächenöffnung austritt als in der 6 Uhr Position.

Hierdurch kann besonders bevorzugt einer vertikalen Windscherung, also einer Variation der Windgeschwindigkeit und/oder Windrichtung über die Höhe, entgegengewirkt werden.

Analog kann zusätzlich oder alternativ eine horizontale Windscherung, beispielsweise aufgrund eines Nachlaufs eines Hindernisses, durch abweichende Steuerungen zu beiden Seiten in der horizontalen Richtung, genannt 3 Uhr Position und 9 Uhr Position, berücksichtigt werden.

Vorzugsweise ist die Öffnung der Strömungskontrolleinrichtung derart ausgebildet, dass eine Luftströmung im Wesentlichen parallel zu der Rotorblattoberfläche austritt bzw. einströmt.

Hierdurch ist eine besonders widerstandsarme Ausblasung / Absaugung möglich. Alternativ kann die Öffnung zumindest teilweise und/oder abschnittsweise geneigt oder parallel zu der Rotorblattoberfläche ausgebildet sein, beispielsweise mit einem Vorsprung, einer Neigung und/oder einer Kante. Hierdurch sind nahezu beliebig in Betrag und Richtung definierbare Luftströme vorstellbar.

Vorzugsweise wird die Luftströmung durch die Öffnung der Strömungskontrolleinrichtung über eine Strömungsgeschwindigkeit und/oder eine Ausblas- bzw. Absaugrate gesteuert.

Vorzugsweise wird die Ausblas- bzw. Absaugrate als Produkt aus einer Oberflächenporosität und einem Verhältnis aus mittlerer Ausblas- bzw. Absauggeschwindigkeit über der Öffnung und der relativen Anströmgeschwindigkeit der ungestörten Strömung bestimmt.

Hierbei wird die Oberflächenporosität vorzugsweise als ein Verhältnis aus offener Fläche, d.h. durch die Öffnung oder die Öffnungen gebildete Fläche, zu der Gesamtrotorblattoberfläche definiert.

Vorzugsweise umfasst die Öffnung mehrere über die Rotorblattlänge verteilte Teilöffnungen. Die Teilöffnungen können als Schlitz oder als anders geformte Öffnungen, beispielsweise mit rechteckigem, rundem, ovalen oder beliebig geformtem Querschnitt ausgestaltet sein.

Weitere Vorteile und bevorzugte Ausgestaltungen werden nachfolgend mit Verweis auf die beigefügten Figuren beschrieben. Hierbei zeigen:
- Fig. 1: schematisch und exemplarisch eine Windenergieanlage,
- Fig. 2: schematisch und exemplarisch ein Rotorblatt,
- Fig. 3: schematisch und exemplarisch ein Ergebnis einer Implementierung in der Steuerung,
- Fig. 4: schematisch und exemplarisch ein Ergebnis einer Implementierung in der Steuerung und
- Fig. 5: schematisch und exemplarisch ein Ergebnis einer Implementierung in der Steuerung.

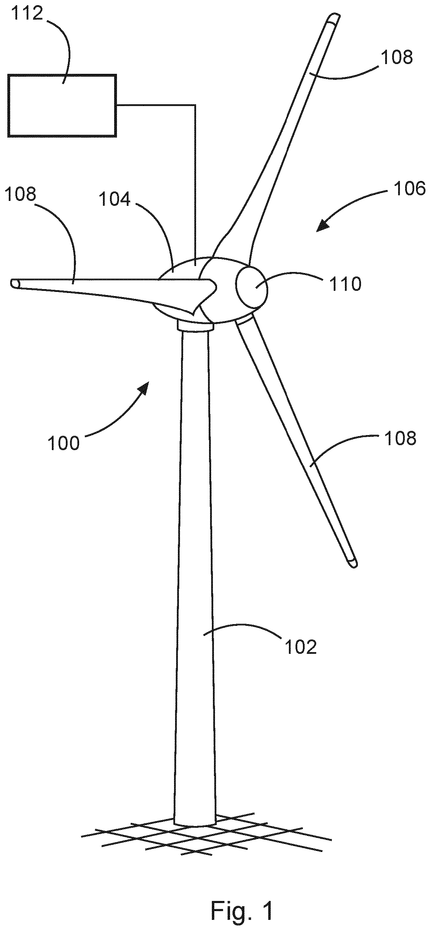

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Der Betrieb der Windenergieanlage 100 wird von einer Steuerung 112 gesteuert. Die Steuerung 112 kann vollständig oder teilweise innerhalb der Gondel 104, dem Turm 102 oder auch entfernt von der Windenergieanlage 100, beispielsweise in einer zentralen Windparksteuerung eines Windparks, implementiert sein.

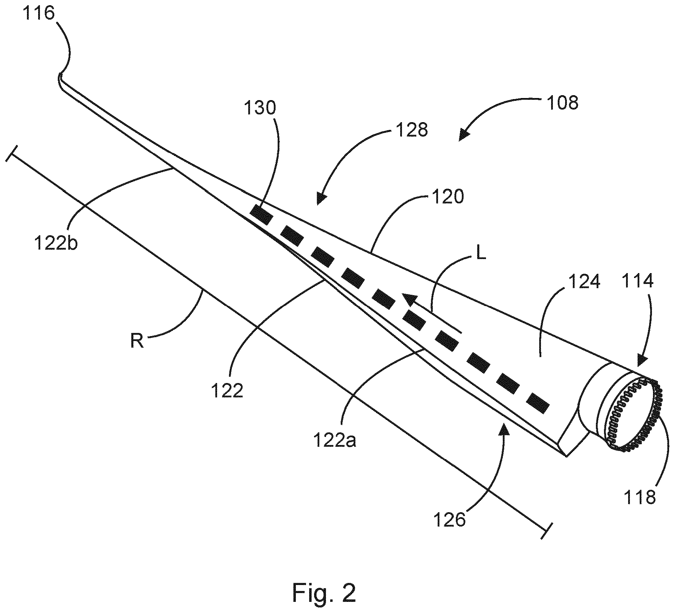

Fig. 2 zeigt eine schematische Darstellung eines Rotorblattes 108 der Windenergieanlage 100 der Fig. 1. Das Rotorblatt 108 erstreckt sich von einer Rotorblattwurzel 114 zu einer Rotorblattspitze 116 in Rotorblattlängsrichtung L. Die Länge des Rotorblattes 108 in Rotorblattlängsrichtung wird aufgrund des Einsatzes in dem Rotor 106 auch als Radius R bezeichnet.

Im Bereich der Rotorblattwurzel 114 ist ein Blattanschluss 118 zur Verbindung des Rotorblattes 108 mit einer Rotorblattnabe des Rotors 106 vorgesehen. Die Pitchwinkel der Rotorblätter 108 können durch Pitchmotoren beispielsweise an den Rotorblattwurzeln 114 der jeweiligen Rotorblätter 108 verändert werden.

Entlang der Rotorblattlängsrichtung L weist das Rotorblatt 108 an Radiuspositionen r unterschiedliche aerodynamische Profile auf. Jedes aerodynamische Profil verläuft von einem Punkt der Vorderkante 120 zu einem Punkt der Hinterkante 122, die über eine Saugseite 124 und eine gegenüberliegende Druckseite 126 miteinander verbunden sind. An der Vorderkante 120 teilt sich die Luftströmung in zwei Teilströme über die Saugseite 124 und die Druckseite 126 auf.

Die Hinterkante 122 weist in einem nabennahen Bereich einen stumpfen Hinterkantenabschnitt 122a und in einem Bereich nahe der Rotorblattspitze 116 einen spitzen Hinterkantenabschnitt 122b auf. Die Dicke der Hinterkante 122 nimmt in Rotorblattlängsrichtung L im Wesentlichen ab.

In Fig. 2 ist ebenfalls eine Strömungskontrolleinrichtung 128 gezeigt, die dazu ausgebildet ist, eine Strömung über das Rotorblatt 108 aktiv zu beeinflussen. Die Strömungskontrolleinrichtung 128 umfasst mehrere als Öffnungen ausgestaltete Rotorblattoberflächenöffnungen 130, die in diesem Beispiel an unterschiedlichen Radiuspositionen in Rotorblattlängsrichtung L angeordnet sind und im Wesentlichen einen rechteckigen Querschnitt aufweisen. Die Strömungskontrolleinrichtung ist dazu eingerichtet, durch die Rotorblattoberflächenöffnung 130 Luft mit einem steuerbaren Luftströmung abzusaugen und/oder auszublasen.

Die Rotorblattoberflächenöffnungen 130 können jede beliebige Form aufweisen und an beliebigen Positionen in beliebiger Anzahl auf der Saugseite 124 und/oder der Druckseite 126 angeordnet sein. Auch Kombinationen unterschiedlicher Formen oder eine einzige Rotorblattoberflächenöffnung 130 sind vorstellbar.

Die Erfindung liegt in der Ansteuerung und Regelung der Luftströmung, die mittels der Strömungskontrolleinrichtung 128 durch die Rotorblattoberflächenöffnung 130 ausgeblasen und/oder abgesaugt wird. Durch das Einblasen oder Absaugen werden an den Rotorblattoberflächenöffnungen 130 Längswirbel erzeugt, die zu einer Erhöhung der wandnahen Strömungsgeschwindigkeiten führen und damit zu einer Stabilisierung der Grenzschichtströmung gegen Strömungsablösung. Der Vorteil dieser aktiven Strömungskontrollmaßnahmen ist, dass die Ausblasung oder das Absaugen der Luft zu- oder abgeschaltet werden kann, also je nach Bedarf erfolgt. Die Stabilisierung der Strömung gegen Ablösung wird demnach nur dann durchgeführt, wenn es aufgrund der vorliegenden Randbedingungen notwendig ist. In anderen Fällen wird davon Abstand genommen, um dann auch keine leistungsreduzierenden Auswirkungen der Kontrollmaßnahme in Kauf nehmen zu müssen. Mit diesem Vorgehen kann damit insgesamt der Anlagenertrag weiter erhöht werden.

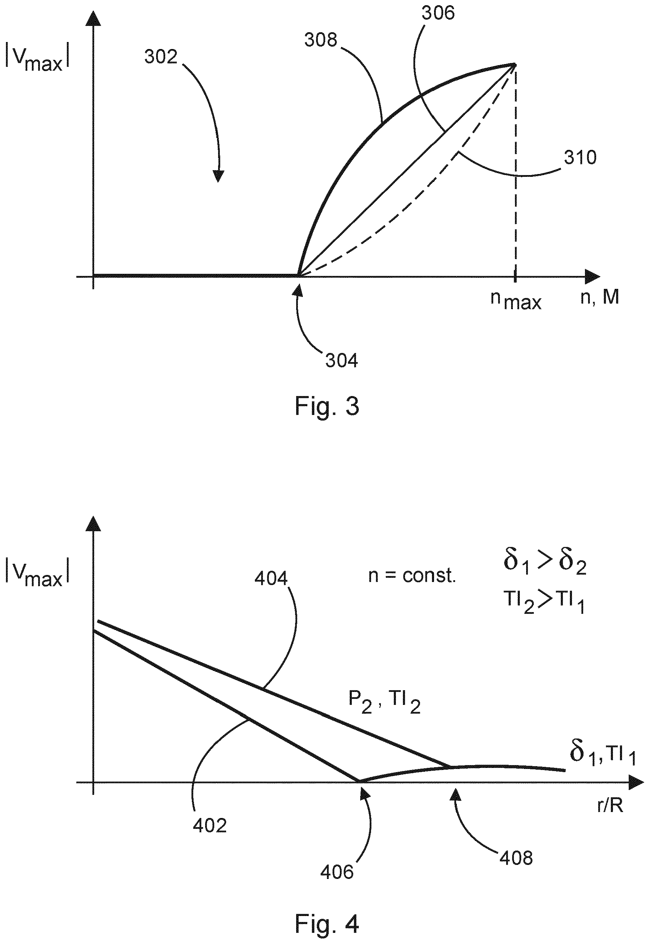

Im Folgenden werden exemplarisch einige Beispiele für die Regelung der Strömungskontrolleinrichtung 128 durch die Steuerung 112 mit Verweis auf die Figuren 3 bis 5 erläutert, die zu einer Optimierung des Anlagenertrags führen. Die Wirksamkeit der aktiven Kontrollmaßnahme mittels der Strömungskontrolleinrichtung 128 wird hier über einen Betrag der maximalen steuerbaren Luftströmung durch die Rotorblattoberflächenöffnung 130 oder über einen Betrag der maximalen wandnormalen Geschwindigkeit über der Rotorblattoberflächenöffnung 130 charakterisiert. Ein positiver Wert entspricht einer maximalen Luftströmung/wandnormalen Geschwindigkeit der Ausblasung, ein negativer Wert einer maximalen Absaugrate/Absauggeschwindigkeit, die sich in der Rotorblattoberflächenöffnung 130 einstellen würde. Im Allgemeinen kann bis zu gewissen Grenzen davon ausgegangen werden, dass sich mit zunehmendem Betrag der maximalen Luftströmung bzw. Geschwindigkeit in der Rotorblattoberflächenöffnung 130 auch eine zunehmende stabilisierende Wirkung einstellt, sich also eine Strömungsablösung auf dem Rotorblatt verhindern lässt.

Für Rotorblattoberflächenöffnungen 130, die eine normal zu der Oberfläche verlaufende Ausblasung ermöglichen, ist die Betrachtung der Luftströmung leicht in die maximale wandnormale Geschwindigkeit zu überführen. Unterschiede ergeben sich insbesondere dann, wenn aufgrund der Geometrie der Rotorblattoberflächenöffnung 130 eine signifikante tangentiale Strömungskomponente durch die Rotorblattoberflächenöffnung 130 entsteht. Insbesondere für diese Fälle können die nachfolgend beispielhaft für die maximale wandnormale Geschwindigkeit beschriebenen Ausführungsformen entsprechend auf die maximale steuerbare Luftströmung verallgemeinert werden.

Fig. 3 zeigt schematisch und exemplarisch eine bevorzugte Implementierung in der Steuerung 112, wobei ein Verlauf der maximalen wandnormalen Geschwindigkeit |*vₘₐₓ*| in der Vertikalen über der Anlagendrehzahl n bzw. dem Anlagendrehmoment M aufgetragen ist. Der Betrag der maximalen wandnormalen Geschwindigkeit |*vₘₐₓ*| nimmt mit zunehmender Drehzahl n zu, da in einem Teillastbereich 302 oftmals keine Strömungsablösung zu erwarten ist, ein Eingriff einer Kontrollmaßnahme ist nicht notwendig, das Rotorblatt 108 kann den maximalen Leistungsbeiwert und Ertrag liefern. Mit zunehmender Windgeschwindigkeit und Drehzahl n steigt die Gefahr der stark leistungsreduzierenden Strömungsablösung am Rotorblatt und somit die Notwendigkeit zur Strömungskontrolle. Daher wird die maximale wandnormale Geschwindigkeit entsprechend ab einem Schwellwert 304 der Drehzahl n sukzessive mit zunehmender Drehzahl n bis zu dem maximalen Drehzahlwert *nₘₐₓ* angehoben.

In Abhängigkeit von weiteren Betriebsparametern bzw. Umgebungsparametern ist der Verlauf des Anstiegs der maximalen wandnormalen Geschwindigkeit |*vₘₐₓ*| ab dem Schwellwert 304 der Anlagendrehzahl n unterschiedlich und kann beispielsweise einen linear ansteigenden Verlauf 306, einen beschränkten Verlauf 308 oder einen exponentiellen Verlauf 310 aufweisen.

Fig. 4 zeigt schematisch und exemplarisch den Verlauf der maximalen wandnormalen Geschwindigkeit |*vₘₐₓ*| über dem mit dem maximalen Radius R normierten Rotorradius rjR für jeweils zwei Luftdichten *ρ*₁*, ρ*₂ bzw. zwei Turbulenzintensitäten *TI*₁, *TI*₂ der Anströmung bei konstanter Anlagendrehzahl n. Ein Verlauf 402 gehört zu der Luftdichte *ρ*₁ und der Turbulenzintensität *TI*₁. Ein Verlauf 404 gehört zu der Luftdichte *ρ*₂ und der Turbulenzintensität *TI*₂.

In diesem Beispiel ist, wie erwähnt bei konstanter Drehzahl n, *ρ*₁ > *ρ*₂ und/oder *TI*₂ *> TI*₁. Das heißt, dass je kleiner die Luftdichte bzw. je größer die Turbulenzintensität der Anströmung ist, desto weiter außen, d.h. bei umso größeren r/R, muss die Rotorblattumströmung kontrolliert werden, d.h. der Betrag der maximalen wandnormalen Geschwindigkeit |*vₘₐₓ*| in der Rotorblattoberflächenöffnung 130 nimmt einen Wert größer Null an. Für den Verlauf 402 ist der Betrag der maximalen wandnormalen Geschwindigkeit |*vₘₐₓ*| bis zu einer Radiusposition 406 größer Null, für den Verlauf 404 entsprechend bis zu einer Radiusposition 408, die näher an der Rotorblattspitze liegt als die Radiusposition 406. Der Betrag der maximalen wandnormalen Geschwindigkeit |*vₘₐₓ*| nimmt entsprechend von einem globalen Maximum im Bereich der Rotorblattwurzel für den Verlauf 404 langsamer ab als für den Verlauf 402. Obgleich ein linearer Verlauf 404, 402 gezeigt ist, so sind auch andere abnehmende Verläufe mit der Radiusposition möglich.

Eine Anlage ist an vielen Standorten einer ggf. stark schwankenden Turbulenzintensität *TI* und/oder durch jahreszeitliche Schwankungen der mittleren Temperatur auch schwankenden Luftdichten p ausgesetzt. Je nach Umgebungsbedingungen wird die Kontrollmaßnahme zur Ablösekontrolle radial auf dem Rotorblatt 108 nur so weit zur Blattspitze hin aktiviert wie nötig.

Bei identischer Turbulenzintensität *TI* wird zum Beispiel die Kontrolle im Winter nur bis zu kleineren Radiuspositionen r/R zu aktivieren sein als im Sommer, in dem die Luftdichten p gegenüber dem Winter reduziert sind. Ebenso verhält es sich mit dem Einfluss der Turbulenzintensität *TI.* So erfahren viele Standorte im Tagesgang, also innerhalb von 24 Stunden, einen Tag-Nacht-Zyklus bei vernachlässigbarer Schwankung der Luftdichte p, bei dem bei Sonneneinstrahlung am Tag eine höhere Turbulenzintensität *TI* in der Anströmung für die Windenergieanlage 100 vorliegt als in der Nacht, in der die Turbulenzintensität *TI* deutlich niedriger ist. Diesem Tagesgang würde die Regelung durch die Steuerung 112 dergestalt begegnen, dass am Tag, bei hoher Turbulenzintensität *TI ,* die Strömungskontrolle zu größeren Radiuspositionen r/R hin aktiviert wird als in der Nacht, wenn die Turbulenzintensität *TI* absinkt. Dies sind nur zwei Beispiele wie die Faktoren Luftdichte *p* und Turbulenzintensität *TI* die Regelung einer aktiven Strömungskontrollmaßnahme 128 am Rotorblatt 108 auf vorteilhafte Weise beeinflussen, um Ablösung der Rotorblattumströmung möglichst zu verhindern.

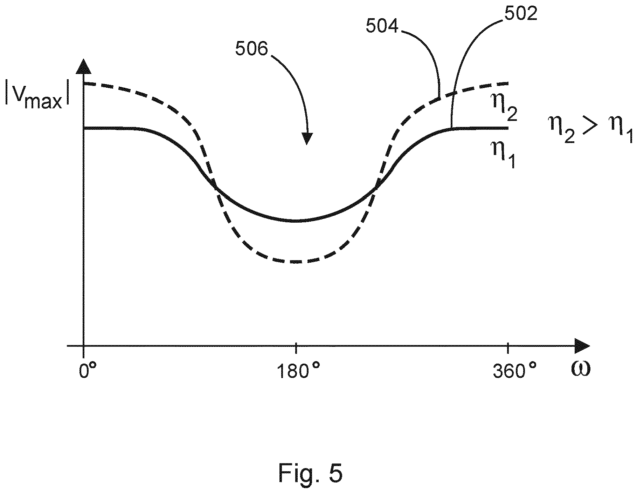

Fig. 5 zeigt schließlich schematisch und exemplarisch den Betrag der maximalen wandnormalen Geschwindigkeit |*vₘₐₓ*| in der Rotorblattoberflächenöffnung 130 über dem Rotorazimut *ω* bei konstanter Drehzahl n für unterschiedliche vertikale Scherungen *η*₁, *η*₂ der Bodengrenzschicht der Anströmung dargestellt.

Unterschiedliche Scherungen *η* der Bodengrenzschicht treten häufig wieder im Tagesgang an einer Windenergieanlage 100 auf. Bei hoher positiver Scherung, in dem Beispiel der Fig. 5 bei *η*₂ ist dabei die Windgeschwindigkeit in größeren Bodenabständen ggf. deutlich größer als in Bodennähe. In Fig. 5 wird ein Verlauf der maximalen wandnormalen Geschwindigkeit |*vₘₐₓ*| für vergleichsweise niedrigere Scherung *η*₁ als ein Verlauf 502 dargestellt, während ein Verlauf 504 für eine größere Scherung *η*₂, *η*₂ > *η*₁ dargestellt ist.

Wenn sich das Rotorblatt also in der sogenannten 12-Uhr Position, d.h. die Position, an der die Blattspitze den größten Bodenabstand hat, befindet, anders ausgedrückt bei oder bei 0° Rotorazimut *ω*, dann erfährt das Rotorblatt 108 in dieser Position üblicherweise höhere Windgeschwindigkeiten *v_{w}* als in der 6-Uhr Position, oder bei 180° Rotorazimut, wenn die Blattspitze also den kleinsten Bodenabstand aufweist. Dies zeigt sich als ein Tiefpunkt der maximalen wandnormalen Geschwindigkeit |*vₘₐₓ*| für beide Verläufe 502, 504 in einem Bereich 506.

Das hat zur Folge, dass in der 12-Uhr Position höhere Anstellwinkel vorliegen als in der 6-Uhr Position. Es ist daher bevorzugt, in der 12-Uhr Position die Kontrollmaßnahme zu aktivieren, während dies in der 6-Uhr Position nicht oder weniger notwendig ist. Dieses Vorgehen ist umso ausgeprägter anzuwenden, je höher die vertikale Scherung ist.

Auch gibt es den Fall, dass negative vertikale Scherungen auftreten, dass also die Windgeschwindigkeit im Wesentlichen mit der Höhe abnimmt. Hier kann dann die Kontrollmaßnahme in der 6-Uhr Position aktiviert weredn, während dies in der 12-Uhr Position nicht oder weniger notwendig ist. Auch ist in dem Fall negativer vertikaler Scherungen das Vorgehen umso ausgeprägter anzuwenden, je höher die Scherung betragsmäßig ist.

Dieses Vorgehen ist auch im Falle von horizontaler Scherung vorteilhaft anwendbar. Ausgeprägte horizontale Scherung kann zum Beispiel vorkommen, wenn eine Windenergieanlage 100 mit einem Teil ihrer Rotorkreisscheibe im Nachlauf einer anderen Windenergieanlage oder eines sonstigen Hindernisses steht. Der Teil der Rotorkreisscheibe, der sich im Nachlauf befindet, erfährt dann kleinere Windgeschwindigkeiten als der Teil der Rotorkreisscheibe, der ungestört angeströmt wird.

Im Prinzip bietet sich hier ein Vorgehen wie in Fig. 5 gezeigt bei der vertikalen Scherung an, mit dem Unterschied, dass im Verlauf der maximalen wandnormalen Geschwindigkeit ein Phasenversatz um 90° zur 3- bzw. 9-Uhr Position stattfindet.

Anwendungsgebiet der Erfindung sind insbesondere Rotorblätter 108 an Windkraftanlagen 100, die über ein aktives Strömungskontrollsystem, beispielsweise die Strömungskontrolleinrichtung 128, verfügen, bei dem über Öffnungen in der Rotorblattoberfläche stationär oder instationär Luft in die Grenzschichtströmung am Rotorblatt eingeblasen oder durch die Öffnungen abgesaugt wird. Das System ist dabei in der Lage, die Geschwindigkeit der ausgeblasenen bzw. abgesaugten Luft in Amplitude und Frequenz zu variieren.

Zweck der Erfindung ist die Ertragsoptimierung von Windkraftanlagen, indem die Strömungskontrollmaßnahme in der Rotorblattgrenzschicht nur noch dann aktiviert und aktiv geregelt wird, wenn ihr stabilisierender Effekt notwendig ist, um eine stark leistungsreduzierende Strömungsablösung zu verhindern. Falls ein solcher Eingriff nicht notwendig ist, ist die Kontrollmaßnahme deaktiviert und hat wenige bis keine schädliche Wirkung auf den Anlagenertrag. Die Regelung der Kontrollmaßnahme berücksichtigt dabei vorzugsweise das auf die Windkraftanlage 100 auftreffende Windfeld und die das Windfeld charakterisierenden Parameter wie Turbulenzintensität, vertikale und horizontale Scherung und Luftdichte, um optimale Betriebsparameter für das Strömungskontrollsystem zu ermitteln, mit dem Ziel der Vermeidung von Strömungsablösungen auf dem Rotorblatt 108.

## Patentansprüche

1. Windenergieanlage (100) mit einem aerodynamischen Rotor (106) mit horizontaler Drehachse mit wenigstens einem Rotorblatt (108),
wobei das Rotorblatt (108) eine aktive Strömungskontrolleinrichtung aufweist, die dazu ausgebildet ist, eine Strömung über das Rotorblatt aktiv zu beeinflussen,
wobei die Strömungskontrolleinrichtung (128) eine Öffnung an einer Rotorblattoberfläche, genannt Rotorblattoberflächenöffnung (130), umfasst, wobei die Strömungskontrolleinrichtung (128) dazu eingerichtet ist, durch die Rotorblattoberflächenöffnung (130) Luft mit einer steuerbaren Luftströmung abzusaugen und/oder auszublasen,
wobei die Windenergieanlage (100) eine Steuerung (112) aufweist, die dazu eingerichtet ist, einen Betrag der steuerbaren Luftströmung durch die Rotorblattoberflächenöffnung (130) hindurch nach wenigstens einer der nachfolgenden Regeln zu steuern:
- bei Überschreiten eines Drehzahlschwellwertes einer Drehzahl (n) des Rotors, sukzessives Anheben der maximalen steuerbaren Luftströmung mit steigender Drehzahl,
- bei Überschreiten eines Drehmomentschwellwertes eines Drehmomentes (M) des Rotors, sukzessives Anheben der maximalen steuerbaren Luftströmung mit steigendem Drehmoment (M).

2. Windenergieanlage (100) nach Anspruch 1, wobei die Strömungskontrolleinrichtung (128) dazu eingerichtet ist, den Betrag der Luftströmung durch die Rotorblattoberflächenöffnung hindurch entlang einer Rotorblattlänge des Rotorblattes zu variieren.

3. Windenergieanlage (100) nach Anspruch 2, wobei die Steuerung (112) dazu eingerichtet ist, den Betrag der steuerbaren Luftströmung durch die Rotorblattoberflächenöffnung (130) hindurch derart zu steuern, dass der Betrag der Luftströmung über die Rotorblattlänge abnimmt.

4. Windenergieanlage (100) nach Anspruch 3, wobei die Steuerung (112) dazu eingerichtet ist, den Betrag der steuerbaren Luftströmung durch die Rotorblattoberflächenöffnung (130) hindurch in Abhängigkeit einer Luftdichte zu steuern, insbesondere derart, dass die Abnahme des Betrages über die Rotorblattlänge mit geringerer Luftdichte abnimmt.

5. Windenergieanlage (100) nach Anspruch 3 oder 4, wobei die Steuerung dazu eingerichtet ist, den Betrag der steuerbaren Luftströmung durch die Rotorblattoberflächenöffnung (130) hindurch in Abhängigkeit einer Turbulenzintensität zu steuern, derart, dass die Abnahme des Betrages über die Rotorblattlänge mit geringerer Turbulenzintensität zunimmt.

6. Windenergieanlage (100) nach einem der vorstehenden Ansprüche, wobei die Steuerung dazu eingerichtet ist, den Betrag der Luftströmung durch die Rotorblattoberflächenöffnung hindurch in Abhängigkeit eines Azimutwinkels des Rotors zu variieren.

7. Windenergieanlage (100) nach Anspruch 6, wobei die Steuerung dazu eingerichtet ist, den Betrag der Luftströmung durch die Rotorblattoberflächenöffnung (130) hindurch zyklisch über den Azimutwinkel derart zu steuern, dass an einer Azimutposition des Rotorblattes mit maximalem Bodenabstand, genannt 12 Uhr Position, ein Betrag der Luftströmung durch die Rotorblattoberflächenöffnung (130) größer ist als in der Azimutposition mit geringstem Bodenabstand, genannt 6 Uhr Position.

8. Windenergieanlage (100) nach einem der vorstehenden Ansprüche, wobei die Rotorblattoberflächenöffnung (130) der Strömungskontrolleinrichtung (128) derart ausgebildet ist, dass eine Luftströmung im Wesentlichen parallel zu der Rotorblattoberfläche austritt bzw. einströmt.

9. Windenergieanlage (100) nach einem der vorstehenden Ansprüche, wobei die Luftströmung durch die Rotorblattoberflächenöffnung (130) der Strömungskontrolleinrichtung über eine Strömungsgeschwindigkeit und/oder eine Ausblas- bzw. Absaugrate gesteuert wird.

10. Windenergieanlage (100) nach Anspruch 9, wobei die Ausblas- bzw. Absaugrate als Produkt aus einer Oberflächenporosität und einem Verhältnis aus mittlerer Ausblas- bzw. Absauggeschwindigkeit über der Öffnung (130) und der relativen Anströmgeschwindigkeit der ungestörten Strömung bestimmt wird.

11. Windenergieanlage (100) nach einem der vorstehenden Ansprüche, wobei die Öffnung (130) aus mehreren über die Rotorblattlänge verteilten Teilöffnungen (130) besteht.

## Claims

1. A wind power installation (100) having an aerodynamic rotor (106) with horizontal axis with at least one rotor blade (108),
wherein the rotor blade (108) has an active flow control device, which is designed to actively influence a flow over the rotor blade,
wherein the flow control device (128) comprises an opening in a rotor blade surface, referred to as a rotor blade surface opening (130), wherein the flow control device (128) is configured to draw off and/or blow out air through the rotor blade surface opening (130) by way of a controllable air flow,
wherein the wind power installation (100) has a controller (112) which is configured to control an amount of the controllable air flow through the rotor blade surface opening (130) according to at least one of the following rules:
- if a rotational speed threshold value of a rotational speed (n) of the rotor is exceeded, increasing the maximum controllable airflow successively with increasing rotational speed,
- if a torque threshold value of a torque (M) of the rotor is exceeded, increasing the maximum controllable air flow successively with increasing torque (M).

2. The wind power installation (100) as claimed in claim 1, wherein the flow control device (128) is configured to vary the amount of the air flow through the rotor blade surface opening along a rotor blade length of the rotor blade.

3. The wind power installation (100) as claimed in claim 2, wherein the controller (112) is configured to control the amount of the controllable air flow through the rotor blade surface opening (130) such that the amount of the air flow decreases over the rotor blade length.

4. The wind power installation (100) as claimed in claim 3, wherein the controller (112) is configured to control the amount of the controllable air flow through the rotor blade surface opening (130) in a manner dependent on an air density, in particular such that the decrease in the amount over the rotor blade length decreases with lower air density.

5. The wind power installation (100) as claimed in claim 3 or 4, wherein the controller is configured to control the amount of the controllable air flow through the rotor blade surface opening (130) in a manner dependent on a turbulence intensity, such that the decrease in the amount over the rotor blade length increases with lower turbulence intensity.

6. The wind power installation (100) as claimed in one of the preceding claims, wherein the controller is configured to vary the amount of the airflow through the rotor blade surface opening in a manner dependent on an azimuth angle of the rotor.

7. The wind power installation (100) as claimed in claim 6, wherein the controller is configured to control the amount of the air flow through the rotor blade surface opening (130) cyclically over the azimuth angle such that an amount of the air flow through the rotor blade surface opening (130) is greater at an azimuth position of the rotor blade with maximum distance from the bottom, referred to as the 12 o'clock position, than at the azimuth position with minimum distance from the bottom, referred to as the 6 o'clock position.

8. The wind power installation (100) as claimed in one of the preceding claims, wherein the rotor blade surface opening (130) of the flow control device (128) is formed such that an air flow exits or flows in substantially parallel to the rotor blade surface.

9. The wind power installation (100) as claimed in one of the preceding claims, wherein the air flow through the rotor blade surface opening (130) of the flow control device is controlled via a flow speed and/or a blowing-out or drawing-off rate.

10. The wind power installation (100) as claimed in claim 9, wherein the blowing-out or drawing-off rate is determined as a product of a surface porosity and a quotient of mean blowing-out or drawing-off speed over the opening (130) and the relative incident flow speed of the undisturbed flow.

11. The wind power installation (100) as claimed in one of the preceding claims, wherein the opening (130) consists of multiple sub-openings (130) distributed over the rotor blade length.

## Revendications

1. Eolienne (100) avec un rotor aérodynamique (106) avec un axe de rotation horizontal avec au moins une pale de rotor (108),
dans laquelle la pale de rotor (108) présente un dispositif de régulation d'écoulement, qui est réalisé pour influencer activement un écoulement sur la pale de rotor,
dans laquelle le dispositif de régulation d'écoulement (128) comprend une ouverture sur une surface de pale de rotor, désignée par ouverture de surface de pale de rotor (130), dans laquelle le dispositif de régulation d'écoulement (128) est mis au point pour évacuer par aspiration et/ou évacuer par soufflage de l'air avec un écoulement d'air pouvant être commandé à travers l'ouverture de surface de pale de rotor (130),
dans laquelle l'éolienne (100) présente une commande (112), qui est mise au point pour commander une quantité de l'écoulement d'air pouvant être commandé à travers l'ouverture de surface de pale de rotor (130) de part en part selon au moins une des règles suivantes :
- en cas de dépassement d'une valeur de seuil de vitesse de rotation d'une vitesse de rotation (η) du rotor, augmentation successive de l'écoulement d'air maximal pouvant être commandé au fur et à mesure que la vitesse de rotation augmente,
- en cas de dépassement d'une valeur de seuil de couple de rotation d'un couple de rotation (M) du rotor, augmentation successive de l'écoulement d'air maximal pouvant être commandé au fur et à mesure que le couple de rotation (M) augmente.

2. Eolienne (100) selon la revendication 1, dans laquelle le dispositif de régulation d'écoulement (128) est mis au point pour faire varier la valeur de l'écoulement d'air à travers l'ouverture de surface de pale de rotor de part en part le long d'une longueur de pale de rotor de la pale de rotor.

3. Eolienne (100) selon la revendication 2, dans laquelle la commande (112) est mise au point pour commander la valeur de l'écoulement d'air pouvant être commandé à travers l'ouverture de surface de pale de rotor (130) de part en part de telle manière que la valeur de l'écoulement d'air diminue sur la longueur de la pale de rotor.

4. Eolienne (100) selon la revendication 3, dans laquelle la commande (112) est mise au point pour commander la valeur de l'écoulement d'air pouvant être commandé à travers l'ouverture de surface de pale de rotor (130) de part en part en fonction d'une densité de l'air, en particulier de telle manière que la diminution de la valeur sur la longueur de pale de rotor diminue au fur et à mesure que la densité de l'air baisse.

5. Eolienne (100) selon la revendication 3 ou 4, dans laquelle la commande est mise au point pour commander la valeur de l'écoulement d'air pouvant être commandé à travers l'ouverture de surface de pale de rotor (130) de part en part en fonction d'une intensité des turbulences de telle manière que la diminution de la valeur sur la longueur de pale de rotor augmente au fur et à mesure que l'intensité des turbulences baisse.

6. Eolienne (100) selon l'une quelconque des revendications précédentes, dans laquelle la commande est mise au point pour faire varier la valeur de l'écoulement d'air à travers l'ouverture de surface de pale de rotor de part en part en fonction d'un angle d'azimut du rotor.

7. Eolienne (100) selon la revendication 6, dans laquelle la commande est mise au point pour commander la valeur de l'écoulement d'air à travers l'ouverture de surface de pale de rotor (130) de part en part de manière cyclique sur l'angle d'azimut de telle manière qu'une valeur de l'écoulement d'air à travers l'ouverture de surface de pale de rotor (130) est plus grande, sur une position d'azimut de la pale de rotor avec une garde au sol maximale, appelée position à 12 heures, que dans la position d'azimut avec une garde au sol la plus basse, appelée position à 6 heures.

8. Eolienne (100) selon l'une quelconque des revendications précédentes, dans laquelle l'ouverture de surface de pale de rotor (130) du dispositif de régulation d'écoulement (128) est réalisée de telle manière qu'un écoulement d'air sort ou afflue de manière sensiblement parallèle à la surface de pale de rotor.

9. Eolienne (100) selon l'une quelconque des revendications précédentes, dans laquelle l'écoulement d'air à travers l'ouverture de surface de pale de rotor (130) du dispositif de régulation d'écoulement est commandé par l'intermédiaire d'une vitesse d'écoulement et/ou d'un débit d'évacuation par soufflage ou par aspiration.

10. Eolienne (100) selon la revendication 9, dans laquelle le débit d'évacuation par soufflage ou par aspiration est défini comme le produit d'une porosité de surface et d'un rapport entre une vitesse moyenne d'évacuation par soufflage ou aspiration par l'ouverture (130) et la vitesse relative d'entrée de l'écoulement non perturbé.

11. Eolienne (100) selon l'une quelconque des revendications précédentes, dans laquelle l'ouverture (130) est constituée de plusieurs ouvertures partielles (130) réparties sur la longueur de pale de rotor.
